# EUROPÄISCHE PATENTANMELDUNG

(11) **EP 1 179 316 A1**
(43) Veröffentlichungstag der Anmeldung: **13.02.2002**
(21) Anmeldenummer: 01117414.1
(22) Anmeldetag: 19.07.2001
(51) Int. Cl.: A47L 25/00, G02C 13/00

(54) **Reinigungsbehälter für Brillen**

(30) Priorität: 11.08.2000 DE 10039254
(71) Anmelder: Freise, Olaf, 82467 Garmisch-Partenkirchen (DE)
(72) Erfinder: Freise, Olaf, 82467 Garmisch-Partenkirchen (DE)
(74) Vertreter: Flosdorff, Jürgen, Dr.

(57) **Zusammenfassung**

Der Reinigungsbehälter für Brillen hat einen Deckel und einen am Boden des Reinigungsbehälters angeordneten Faltenbalg, wobei die zu reinigende Brille der Länge nach zwischen dem Deckel und dem Faltenbalg einklemmbar ist. Zur Halterung des Faltenbalgs sind in der Umfangswand des Reinigungsbehälters mehrere gleichmäßig über den Umfang verteilte Einbuchtungen vorgesehen, die nach innen ragende Nasen bilden, die den Faltenbalg in einem axial leicht zusammengedrückten Zustand übergreifen. Hierdurch ist die Montage des Reinigungsbehälters vereinfacht, wobei durch die Form der Einbuchtungen gewährleistet ist, daß der Faltenbalg nach axialem Zusammendrücken stets ohne Verkanten in den Ausgangszustand zurückkehren kann.

## Beschreibung

Die Erfindung betrifft einen Reinigungsbehälter für Brillen, mit einem Deckel und einem am Boden des Reinigungsbehälters angeordneten Faltenbalg, wobei die zu reinigende Brille der Länge nach zwischen dem Deckel und dem Faltenbalg einklemmbar ist.

Der Faltenbalg hat bevorzugt auf der oberen Stirnfläche eine kreisförmige Senke, um die Brille zu zentrieren. In dem Deckel kann zu demselben Zweck eine beispielsweise mittige kalottenförmige Vertiefung vorgesehen sein. Es liegt aber auch im Rahmen der Erfindung, daß an dem Deckel ein weiteres elastisches Halteglied für die Brille angeordnet sein kann, beispielsweise ein Schaumstoffkörper.

In den Reinigungsbehälter wird eine Reinigungsflüssigkeit eingefüllt. Zum Reinigen der Brille kann es genügen, die Brille eine gewisse Zeit lang in einem in die Flüssigkeit eingetauchten Zustand zu belassen. Der Reinigungsvorgang kann dadurch verkürzt werden, daß der Reinigungsbehälter geschüttelt oder verschwenkt wird, wobei der Faltenbalg die Wirkung hat, daß Brillen unterschiedlicher Länge schonend in der Mitte des Reinigungsbehälters einklemmbar sind, so daß die Brillengläser beim Reinigungsvorgang nicht an die Umfangswand des Reinigungsbehälters anschlagen können.

Aus der EP 0 231 454 B1 ist ein Reinigungsbehälter der eingangs genannten Art bekannt, bei dem ein Faltenbalg an der Unterseite mit einem Befestigungsstutzen versehen ist, der in einen Ringsteg einer Scheibe eingesprengt ist, die ihrerseits in eine ringförmige Sicke des Bodens des Reinigungsbehälters eingedrückt ist. Diese Art der Befestigung des Faltenbalges ist aufwendig und mit erheblichen Kosten verbunden.

Der vorliegenden Erfindung liegt die Aufgabe zugrunde, einen Reinigungsbehälter der betrachteten Art so zu verbessern, daß der Faltenbalg auf einfachere Weise am Boden des Reinigungsbehälters gehalten ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Der erfindungsgemäße Reinigungsbehälter hat an seiner Umfangswand mehrere nach innen ragende Vorsprünge, die einen Randabschnitt des Faltenbalgs übergreifen. Dabei ist bevorzugt, daß die Vorsprünge den Rand des obersten Faltenglieds des Faltenbalgs übergreifen und daß dieser in einem axial leicht zusammengedrückten Zustand an radial inneren Halteabschnitten der Vorsprünge anliegen. Die Vorsprünge befinden sich dabei auf gleicher Höhe und sind bevorzugt gleichmäßig über den Umfang des Behälters verteilt ausgebildet. In einer bevorzugten Ausführungsform der Erfindung sind sechs derartige Vorsprünge vorgesehen.

Der Reinigungsbehälter besteht aus Kunststoff wie z.B. PP und ist bevorzugt im Blasverfahren hergestellt. Der Faltenbalg besteht bevorzugt aus einem Kunststoff wie HDPE.

Mit besonderem Vorteil wird vorgeschlagen, daß die Vorsprünge durch Vertiefungen bzw. Einbuchtungen in der Umfangswand gebildet sind. Diese Einbuchtungen haben in der Aufsicht (bzw. Seitenansicht des Behälters) bevorzugt etwa die Form einer Ellipse.

In allen Horizontalschnitten haben die Einbuchtungen eine Bogenform, bevorzugt die Form eines Kreisbogenabschnitts. Im Vertikalschnitt sind die Einbuchtungen aus einem oberen bogenförmigen, konvex nach innen verlaufenden ersten Abschnitt, einem anschließenden kurzen, nach außen zurückspringenden Halteabschnitt für den Faltenbalg und einen unteren bogenförmigen Führungsabschnitt zusammengesetzt. Der obere erste Abschnitt bildet zusammen mit dem nach außen zurückspringenden Halteabschnitt eine Nase, die den Rand des Faltenbalgs übergreift. Dabei ist der freie Innendurchmesser am äußere Ende der Halteabschnitte der Einbuchtungen geringfügig größer (in der Größenordnung von einigen Millimetern) als der Außendurchmesser des Faltenbalgs, während der freie Innendurchmesser zwischen den "Nasenspitzen" kleiner ist als der Außendurchmesser des Faltenbalgs.

Die unteren bogenförmigen Führungsabschnitte nehmen einen solchen Verlauf, daß der freie Innendurchmesser nach unten hin allmählich zunimmt. Dabei beträgt der Radius des Führungsabschnitts in einer bevorzugten Ausführungsform des Reinigungsbehälters etwa 50 mm. Denselben Radius kann der obere bogenförmige Abschnitt der Einbuchtung haben, wobei in diesem Bereich der freie Zwischenraum zwischen den ersten Abschnitten allmählich kleiner wird.

Die Montage des Faltenbalgs ist sehr einfach, da dieser lediglich entlang der oberen ersten Abschnitte nach unten gedrückt werden muß, wobei der aus einem verhältnismäßig weichen Kunststoff bestehende Faltenbalg durch entsprechende Verformung seiner Faltenglieder an den "Nasen" vorbei gelangt. Der Faltenbalg kehrt dann infolge seiner Elastizität in den Ausgangszustand zurück, wobei er von den unteren Führungsabschnitten der Einbuchtungen geführt und zentriert wird, so daß er sich mit seinem oberen Rend an die Unterseite der Halteabschnitte der Einbuchtungen anlegt.

Wenn der Faltenbalg beim Gebrauch zusammengedrückt wird, kehrt er stets -ohne zu verkanten- infolge der besonderen Einbuchtungen in die mittige, zentrierte Ausgangsstellung zurück.

Weitere Einzelheiten der Erfindung ergeben sich aus der nachfolgenden Beschreibung einer bevorzugten Ausführungsform des Brillenreinigungsbehälters. Dabei zeigen:
- Fig. 1: einen Vertikalschnitt durch den Behälter und
- Fig. 2: einen Horizontalschnitt durch den Bereich der Einbuchtungen.

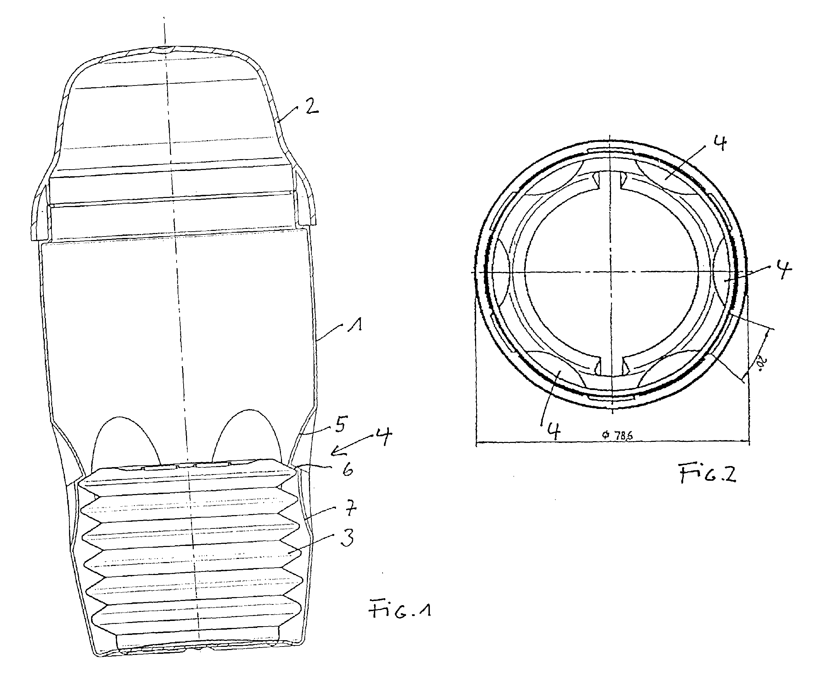

Der in Fig. 1 dargestellte Reinigungsbehälter 1 hat einen aufschraubbaren Deckel 2, mit dem der Reinigungsbehälter 1 dicht verschließbar ist, so daß auch dann keine Reinigungsflüssigkeit austreten kann, wenn der Reinigungsbehälter zum Reinigen einer nicht dargestellten Brille geschüttelt wird. Diese Brille ist dabei in Längsrichtung zwischen dem Deckel 2 und einem -je nach Abmessung der Brille- mehr oder weniger axial zusammengedrückten Faltenbalg 3 eingeklemmt.

Der Reinigungsbehälter 1 hat sechs gleichmäßig über den Umfang verteilte Einbuchtungen 4, die sich alle auf gleicher Höhe befinden. Diese Einbuchtungen bestehen im Vertikalschnitt gesehen aus einem oberen bogenförmig gekrümmten Abschnitt 5, der zusammen mit einem anschließenden kurzen, zurückspringenden Halteabschnitt 6 eine Nase bildet. An den Halteabschnitt 6 schließt ein unterer bogenförmige Führungsabschnitt 7 an, der zur Außenkontur des Reinigungsbehälters zurückführt. Die Abschnitt 5 und 7 haben (im Vertikalschnitt) eine Kreisbogenform mit einem Radius, der in einer bevorzugten Ausführungsform der Erfindung 50 mm beträgt. Der Halteabschnitt 6 verläuft geradlinig mit einer Neigung von bevorzugt 30°, wenn die Neigung des oberen Randes des anliegenden Faltenbalgs entsprechend gewählt ist.

Die Einbuchtungen 4 haben in allen Horizontalschnitten eine Kreisbogenform, wie Fig. 2 zeigt.

Der Faltenbalg liegt leicht axial zusammengedrückt an der Unterseite der "Nasen" an. Wenn der Faltenbalg beim Gebrauch axial zusammengedrückt wird, wird er von den Führungsabschnitten 7 zentriert, während er sich wieder axial ausdehnt, wobei er -ohne zu verkanten- wieder in Anlage an die Halteabschnitte 6 gerät.

## Patentansprüche

1. Reinigungsbehälter für Brillen, mit einem Deckel und einem am Boden des Reinigungsbehälters angeordneten Faltenbalg, wobei die zu reinigende Brille der Länge nach zwischen dem Deckel und dem Faltenbalg einklemmbar ist,
**dadurch gekennzeichnet,**
**daß** an der Umfangswand des Reinigungsbehälters (1) mehrere nach innen ragende Vorsprünge (5, 6,7) angeordnet sind, die einen Randabschnitt des Faltenbalgs (3) übergreifen.

2. Reinigungsbehälter nach Anspruch 1,
**dadurch gekennzeichnet, daß** die Vorsprünge (5,6,7) gleichmäßig über den Umfang verteilt ausgebildet sind.

3. Reinigungsbehälter nach Anspruch 1 oder 2,
**dadurch gekennzeichnet, daß** sechs Vorsprünge (5,6,7) ausgebildet sind.

4. Reinigungsbehälter nach einem der Ansprüche 1 bis 3,
**dadurch gekennzeichnet, daß** die Vorsprünge durch Vertiefungen bzw. Einbuchtungen (4) in der Umfangswand gebildet sind.

5. Reinigungsbehälter nach Anspruch 4,
**dadurch gekennzeichnet, daß** die Einbuchtungen in der Aufsicht etwa die Form einer Ellipse haben.

6. Reinigungsbehälter nach Anspruch 4 oder 5,
**dadurch gekennzeichnet, daß** die Einbuchtungen (4) im Horizontalschnitt eine Bogenform haben.

7. Reinigungsbehälter nach einem der Ansprüche 4 bis 6,
**dadurch gekennzeichnet, daß** die Einbuchtungen (4) im Vertikalschnitt einen oberen bogenförmigen ersten Abschnitt (5), einen anschließenden kurzen, nach außen zurückspringenden Halteabschnitt (6) für den Faltenbalg und einen unteren bogenförmigen Führungsabschnitt (7) aufweisen.

8. Reinigungsbehälter nach Anspruch 7,
**dadurch gekennzeichnet, daß** der freie Innendurchmesser der Einbuchtungen am äußeren Ende der Halteabschnitte (6) geringfügig größer ist als der Außendurchmesser des Faltenbalgs (3).
